# FASCICULE DE BREVET EUROPEEN

(11) **EP 3 220 327 B1**
(45) Date de publication et mention de la délivrance du brevet: **12.09.2018**
(21) Numéro de dépôt: 17157281.1
(22) Date de dépôt: 22.02.2017
(51) Int. Cl.: G06Q 10/08

(54) **SYTÈME D'ACHEMINEMENT D'OBJETS PAR DES INDIVIDUS D'UNE COMMUNAUTÉ, METTANT EN OEUVRE UN SYSTÈME DE TRAÇABILITÉ SPATIOTEMPORELLE**
SYSTEM ZUM TRANSPORTIEREN VON GEGENSTÄNDEN DURCH PERSONEN EINER GEMEINSCHAFT UND DURCH EIN RAUMZEIT-NACHVERFOLBARKEITSSYSTEM
SYSTEM FOR CONVEYING ITEMS BY MEANS OF INDIVIDUALS OF A COMMUNITY AND USING A SPACE/TIME TRACEABILITY SYSTEM

(30) Priorité: 16.03.2016 FR 1652216
(43) Date de publication de la demande: 20.09.2017
(73) Titulaire: PA.COTTE SA, 1009 Pully (CH)
(72) Inventeur: COTTE, Pierre-Alain, 92224 Amberg (DE)
(74) Mandataire: reuteler & cie SA

(56) Documents cités:
- US-A1- 2014 236 856
- US-B1- 7 974 637

## Description

Le domaine de l'invention est celui de la logistique. Plus précisément, l'invention concerne l'acheminement d'objets, et plus particulièrement d'objets dont les dimensions et le poids permettent leur acheminement par toute personne et par tout moyen ou quasiment.

A ce titre, l'invention concerne un système d'acheminement d'objets dont le poids n'excède pas 8 kg ou, de façon plus générale, dont les dimensions et le poids correspondent à la définition d'un bagage à mains pour les compagnies aériennes. Bien entendu, l'invention s'applique également à des objets de dimensions et/ou de poids inférieurs, pouvant aller jusqu'à l'expédition de simples plis.

Dans le domaine de l'invention, certains prestataires d'achats et de vente en ligne de produits ont généré des attentes considérables en matière de livraison desdits produits partout dans le monde.

Cependant, à l'échelle internationale, les livraisons express, en quelques heures, sont compliquées voire impossibles et sont, à tout le moins, très lentes et/ou très coûteuses. Il existe donc des facteurs très limitant pour le commerce international et les livraisons privées, ceci alors que le commerce par internet ne connaît pas de frontière. Il en résulte que les livraisons express internationales ne constituent qu'un marché extrêmement réduit, ceci en dépit des revenus colossaux que connaissent certaines compagnies de livraisons internationales.

Ce constat est lié au fait que tous les systèmes logistiques de livraison actuels sont basés sur une approche de contrôle centralisé reposant notamment sur :
- le regroupement des marchandises à acheminer ;
- le transport en masse ;
- l'envoi par colis.

De plus, l'analyse des pratiques classiques conduit à constater que :
- les courriers locaux sont limités à des livraisons limitées sur des zones géographiques relativement réduites, voire locales (l'adoption des modèles de commerce consistant à mettre des ressources à disposition des utilisateurs par des acteurs différents des professionnels classiques tendant pourtant à générer des possibilités nouvelles et importantes) ;
- les livraisons nationales (plus ou moins monopolistiques) fonctionnement parfaitement, dans des délais avoisinants les 24 heures, mais ce marché est par définition limité à un seul pays ;
- les livraisons internationales restent des marchés de niche, qui favorisent le développement de compagnies de livraisons spécialisées à l'international, dans des délais et des coûts parfois incompatibles voire inacceptables.

Il existe donc actuellement une attente, implicite ou explicite, s'agissant de l'expédition et de la livraison de biens dans des délais réduits par rapport à la pratique courante, ceci pour des montants de prestation peu élevés, voire à bas coût.

Or, une voie pour satisfaire cette attente réside dans une approche communautaire et/ou collaborative, dans la mesure où chacun évolue dans un univers à l'intérieur duquel une grande proportion d'individus procurent ensemble des possibilités multiples de déplacements.

Il est donc envisageable selon cette approche de faire partir un objet d'un point de départ en le confiant à l'un des individus d'un système collaboratif et de l'acheminer à un point d'arrivée par l'intermédiaire de cet individu seul ou en relais avec un ou plusieurs autres individus du système collaboratif.

Bien entendu, dans un tel système, il reste nécessaire de connaître en temps réel la position de l'objet à acheminer, pour le situer vis-à-vis de son point d'arrivée et/ou vis-à-vis des individus participant au système collaboratif.

Dans ce contexte, il est prévisible pour suivre les déplacements des objets à acheminer, de les équiper de moyens de géolocalisation et de moyens de communication leur permettant d'émettre des données relatives à leur localisation. On obtient de cette façon un système de traçabilité du cheminement des objets.

Toutefois, une telle solution engendre un problème technique s'agissant de l'alimentation électrique des moyens de géolocalisation et de communication. Il faut en effet prévoir en outre un système de rechargement en électricité des moyens d'alimentation dédiés à la géolocalisation de l'objet, ce qui implique des contraintes difficilement gérables, s'agissant de reporter sur les individus du système collaboratif la charge du suivi du rechargement électrique des moyens en question.

L'invention a notamment pour objectif de s'inscrire dans une approche logistique collaborative qui n'implique pas ou peu de contrainte au niveau des individus participant à l'acheminement des objets, s'agissant notamment de la gestion du niveau de rechargement électrique des moyens techniques couplés aux objets à acheminer et impliqués dans la traçabilité spatio-temporelle des objets.

Le document US2014/236856 décrit un système de ce type. Cependant, le système d'acheminement d'objets par des individus d'une communauté n'est pas sécurisé.

L'invention a donc pour objectif de fournir un système d'acheminement d'objets global, mettant en oeuvre un tel système de traçabilité, qui soit sécurisé.

L'invention a également pour objectif de fournir un tel système d'acheminement d'objets qui soit aisément accessible et pratique d'utilisation pour les expéditeurs d'objets.

L'invention a de plus pour objectif de fournir un tel système d'acheminement d'objets qui assure un service rapide et peu coûteux pour les expéditeurs d'objets.

L'invention a aussi pour objectif de fournir un tel système d'acheminement d'objets qui soit aisément accessible et facile d'utilisation pour des individus souhaitant intégrer la communauté contribuant au système collaboratif.

Ces objectifs, ainsi que d'autres qui apparaîtront par la suite, sont atteints grâce à l'invention qui a pour objet un système d'acheminement d'objets par des individus d'une communauté, mettant en oeuvre un système de traçabilité spatio-temporelle comprenant une plate-forme informatique incluant au moins une application informatique destinée à être chargée par des unités informatiques portables détenues par les individus de la communauté et comprenant des premiers moyens de communication de proximité sans fil et des moyens de géolocalisation, le système d'acheminement d'objets comprenant des dispositifs embarqués dans des emballages destinés à contenir les objets, les dispositifs embarqués comprenant chacun des deuxièmes moyens de communication de proximité sans fil, aptes à communiquer avec les premiers moyens de communication de proximité sans fil, et au moins un module informatique de traitement apte à coopérer avec les deuxièmes moyens de communication de proximité sans fil pour récupérer et traiter des données fournies par lesdits deuxièmes moyens de communication de proximité sans fil, le au moins un module informatique comprenant ladite application informatique en vue d'autoriser l'échange de données entre le module informatique et les unités informatiques portables, l'application informatique étant paramétrée pour ouvrir un canal de communication destiné à permettre aux dispositifs embarqués d'accéder et d'utiliser les moyens de géolocalisation des unités informatiques.

Ainsi, grâce à l'invention, on obtient un système de traçabilité spatio-temporelle d'objets en déplacement dans un système collaboratif d'acheminement d'objets par des individus d'une communauté, ceci sans reporter la responsabilité du bon fonctionnement des moyens techniques couplés à l'objet acheminé, s'agissant en particulier du niveau de rechargement électrique des moyens techniques couplés à l'objet à acheminer pour assurer sa géolocalisation.

En effet, les moyens techniques très consommateurs d'énergie électrique, tels que les moyens de géolocalisation, sont absents des moyens techniques couplés à l'objet acheminé. Seuls les moyens impliquant une faible consommation électrique sont couplés à l'objet acheminé.

Il en résulte qu'il est possible d'alimenter électriquement des moyens techniques couplés à l'objet acheminé par une batterie simple, susceptible d'assurer de façon autonome une alimentation électrique sur une longue durée.

Selon le principe de l'invention, les dispositifs embarqués se greffent en quelque sorte aux unités portables, et éventuellement successives au cours de la mobilité de l'objet acheminé, par l'intermédiaire des moyens de communication de proximité sans fil et utilisent « l'intelligence » des unités portables, en particulier pour ce qui concerne les moyens de géolocalisation intégrés aux unités portables.

Les dispositifs embarqués peuvent ainsi parcourir de longues distances en toute autonomie électrique. De plus, ils peuvent être réutilisés à de nombreuses reprises, sans devoir les recharger électriquement, en étant couplés à différents objets successifs à acheminer.

Bien entendu, la possible réutilisation à plusieurs reprises des dispositifs embarqués confèrent au système de traçabilité un intérêt économique évident, ainsi qu'un bilan carbone optimisé en évitant l'obsolescence rapide des dispositifs embarqués, en tout ou partie.

Selon une solution avantageuse, les unités informatiques portables sont constituées par des ordiphones.

Avec un tel système collaboratif, on obtient la possibilité de réunir dans une même communauté un nombre d'individus très important, les téléphones portables intelligents étant aujourd'hui répandus avec une couverture de la population très importante.

En outre, par définition, ces téléphones portables sont portés par les individus. Il en résulte que lorsqu'un individu de la communauté porte un objet à acheminer, le dispositif embarqué est en permanence à proximité du téléphone portable de l'individu en question, permettant de communiquer avec celui-ci et d'utiliser ses ressources de géolocalisation en permanence ou quasiment.

Avantageusement, les dispositifs embarqués comprennent des moyens d'alimentation électrique sous forme de batterie non rechargeable.

On peut de cette façon équiper les dispositifs embarqués de batterie longue durée, relativement peu coûteuse. Ainsi, la seule gestion de l'alimentation électrique des dispositifs embarqués consiste à effectuer un simple remplacement de la batterie lorsque celle-ci est complétement déchargée.

Selon un mode de réalisation avantageux du système d'acheminement, la plateforme inclut des premiers moyens de communication longue distance, les unités informatiques comprenant des deuxième moyens de communication longue distance aptes à communiquer avec le premier moyen de communication longue distance.

De cette façon, il est possible de centraliser au niveau de la plateforme toutes les informations concernant la géolocalisation, et plus généralement l'acheminement des objets, ceci par l'intermédiaire des ordiphones portés par les individus assurant l'acheminement des objets.

Dans ce cas, la plateforme comprend préférentiellement un serveur accessible à distance, et paramétré pour recevoir des données d'acheminement d'un objet d'un point de départ à un point d'arrivée.

On comprend que, ainsi, la plateforme peut servir de portail commercial permettant à un utilisateur de s'identifier et de déclarer ses besoins d'acheminement d'un objet d'un point de départ à un point d'arrivée.

Avantageusement, le serveur comprend des moyens de stockage de données de géolocalisation transmises à la plateforme par les unités portables.

Selon un mode de réalisation préférentiel, le serveur héberge une base de données concernant des objets à acheminer parmi lesquelles :
- des informations caractérisant en poids et/ou en dimensions un objet à acheminer ;
- une date de départ à partir d'un lieu géolocalisé ;
- une date de livraison en un lieu géolocalisé.

Bien entendu, il est également possible d'enrichir la base de données avec d'autres renseignements, notamment de type marchand, permettant d'identifier et de facturer les utilisateurs.

Préférentiellement, le serveur héberge une base de données concernant les unités portables détenue par les individus de la communauté parmi lesquelles :
- une date de départ de l'individu ;
- un lieu de départ de l'individu ;
- une date d'arrivée de l'individu ;
- un lieu d'arrivée de l'individu.

Là encore, le serveur peut également permettre l'enrichissement de la base de données avec des données complémentaires, concernant l'identité des individus, leur contribution à l'acheminement de l'objet et les moyens de les rétribuer.

Selon une solution avantageuse, chaque dispositif embarqué est identifiable par un code numérique d'identification, le serveur hébergeant une base de données de codes numériques d'identification des dispositifs embarqués.

Dans ce cas, la plateforme comprend des moyens de connexion et de communication avec des interfaces utilisateurs paramétrées pour transmettre à la plateforme des requêtes d'acheminement d'objets.

L'invention concerne également un procédé de traçabilité d'un objet acheminé à l'aide d'un système tel que décrit précédemment, caractérisé en ce qu'il comprend les étapes de :
- activation de l'application informatique autorisant l'échange de données entre une unité informatique portable et un dispositif embarqué ;
- géolocalisation du dispositif embarqué par l'utilisation des moyens de géolocalisation de l'unité informatique portable.

L'invention concerne également un programme d'ordinateur comprenant des instructions adaptées pour l'exécution des étapes du procédé décrit précédemment lorsque ledit programme d'ordinateur est exécuté par au moins un processeur.

L'invention concerne encore un support d'enregistrement lisible par un ordinateur sur lequel est enregistré un programme d'ordinateur comprenant des instructions pour l'exécution des étapes du procédé décrit précédemment.

D'autres caractéristiques et avantages de l'invention apparaitront plus clairement à la lecture de la description suivante d'un mode de réalisation préférentiel de l'invention, donné à titre de simple exemple illustratif et non limitatif, et des dessins annexés parmi lesquels :
- la figure 1 illustre schématiquement un système d'acheminement d'objets selon l'invention ;
- la figure 2 procure une illustration schématique d'un contenant susceptible d'être utilisé pour acheminer un objet, et de son environnement dans un système d'acheminement d'objets selon l'invention.

Tel qu'indiqué précédemment, le principe de l'invention est de proposer un système d'acheminement d'objets de type collaboratif, c'est-à-dire mis en oeuvre par un ensemble d'individus d'une communauté, ledit système mettant en oeuvre un système de traçabilité spatio-temporelle.

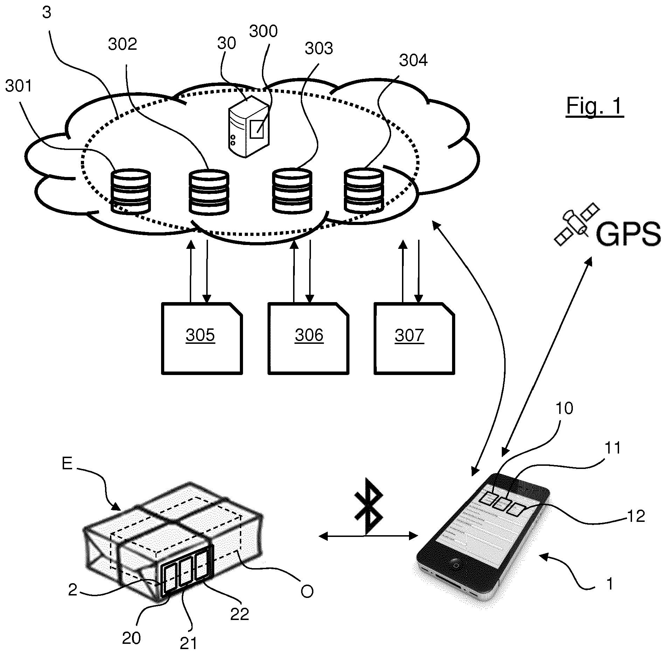

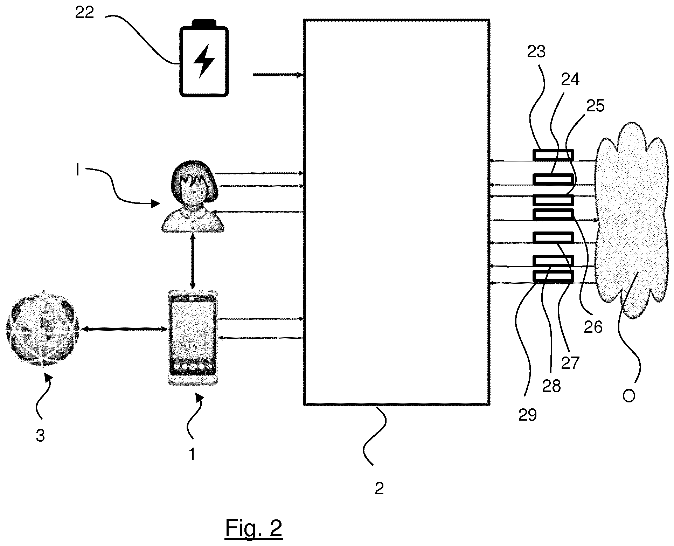

Tel qu'illustré par les figures 1 et 2, un tel système est du type comprenant :
- des unités informatiques portables 1 détenues par des individus I d'une communauté ;
- une plate-forme informatique 3 incluant une application informatique destinée à être chargée par es unités informatiques portables ;
- des dispositifs embarqués 2 dans des emballages E destinés à contenir les objets O à acheminer, ces emballages pouvant être tout contenant (enveloppe, colis, paquet...) de formes et dimensions adaptées à l'objet à acheminer, (les dimensions du contenant et le poids global du contenant ajouté à celui du contenu étant de préférence, mais non exclusivement, adaptés aux critères définis pour les bagages à mains selon les critères des compagnies aériennes).

Selon un mode de réalisation particulier et préférentiel, les unités informatiques portables sont constituées par des ordiphones d'un type courant répandu, et comprenant notamment des premiers moyens de communication 10 de proximité sans fil et des moyens de géolocalisation 11.

Selon le principe de l'invention, le système d'acheminement met en oeuvre un système de traçabilité des objets comprenant la plate-forme informatique 3, et reposant notamment sur l'utilisation des dispositifs embarqués 2 comprenant quant à eux des deuxièmes moyens de communication 20 de proximité sans fil, aptes à communiquer avec les premiers moyens de communication 10 de proximité sans fil. De plus, ces dispositifs embarqués comprennent au moins un module informatique 21 de traitement apte à coopérer avec les deuxièmes moyens de communication 20 de proximité sans fil pour récupérer et traiter des données fournies par ces deuxièmes moyens de communication.

Bien entendu, les dispositifs embarqués pourront comprendre bien d'autres moyens structurels et fonctionnels, évoqués par la suite.

Selon l'invention, le module informatique 21 des dispositifs embarqués et des unités informatiques 1 comprennent en commun une application informatique autorisant l'échange de données entre eux. Cette application informatique est paramétrée pour ouvrir un canal de communication destiné à permettre l'accès et l'utilisation des moyens de géolocalisation 11 des unités informatiques par le module informatique 21 des dispositifs embarqués 2. En d'autres termes, les modules informatiques intègrent l'application informatique, celle-ci pouvant également être chargée, à partir de la plateforme informatique, sur les unités informatiques détenues par les individus de la communauté. Une fois le lien établi entre le dispositif embarqué et l'unité informatique, l'application informatique (commune au dispositif embarqué et à l'unité informatique) ouvre un canal de communication par l'intermédiaire des premiers et deuxièmes moyens de communication de proximité sans fil, et autorise l'accès et l'utilisation, par le dispositif embarqué, des moyens de géolocalisation de l'unité informatique.

Ainsi, comme illustré par les figures 1 et 2, le module informatique des dispositifs embarqués utilisent comme ressources dédiées à la traçabilité, et donc à la géolocalisation, celles des unités informatiques portables (donc en l'occurrence celles de l'ordiphone détenu par l'individu acheminant l'objet), ceci tout au long du déplacement effectué par l'individu. Bien entendu, le système de traçabilité s'applique également au cas où plusieurs individus se relaient pour acheminer l'objet, le dispositif embarqué communicant alors successivement avec chaque unité informatique portable des individus.

Comme cela va être expliqué plus en détails par la suite, la géolocalisation de l'objet peut être également obtenu par l'intermédiaire d'une unité informatique portable détenu par un dépositaire de l'objet, l'objet étant alors en attente éventuelle de prélèvement par un individu en déplacement.

Selon une solution avantageuse, les premiers moyens de communication de proximité sans fil et les deuxièmes moyens de communication de proximité sans fil échangent des données par Bluetooth (ou par wifi selon un autre mode de réalisation envisageable).

Les deuxièmes moyens de communication de proximité sans fil et le module informatique de traitement des dispositifs embarqués sont alimentés par une simple batterie non rechargeable 22.

On note que les dispositifs embarqués pourront répondre à d'autres moyens structurels et/ou fonctionnels alimentés, de façon périodique ou continue par la batterie du dispositif, et notamment :
- moyens de détection de choc 23
- capteur de température 24 ;
- capteur d'humidité 25 ;
- moyen d'éclairage 26 ;
- moyen de capture vidéo 27 ;
- moyens de mesure du poids 28 :
- moyens de détection d'ouverture/fermeture 29 ;

Tel que cela apparaît sur la figure 1, le système d'acheminement d'objets comprend une plateforme informatique 3 de gestion des acheminements d'objets, incluant les premiers moyens de communication longue distance destinés à communiquer avec des deuxièmes moyens de communication longue distance intégrés aux unités informatiques portables.

Cette plateforme comprend un serveur 30 accessible à distance et paramétré pour recevoir des données d'acheminement d'un objet d'un point de départ à un point d'arrivée. Le mode de saisie du point de départ et du point d'arrivée est décrit plus en détails par la suite.

Le serveur comprend en outre des moyens de stockage 300 de données de géolocalisation transmises à la plateforme par les unités portables.

Le système de traçabilité des objets à acheminer n'est donc pas restreint au stockage local des données de géolocalisation transmises par les unités informatiques portables au sein du module informatique des dispositifs embarqués. Au contraire, outre les ressources de géolocalisation des unités informatiques portables utilisées par les dispositifs embarqués, ces derniers utilisent également les moyens de communication longue distance des unités informatiques portables pour échanger avec la plateforme de gestion.

Par ailleurs, le serveur héberge une première base de données 303 concernant les individus « clients » et les objets à acheminer parmi lesquelles :
- des informations caractérisant en poids et en dimension et un objet à acheminer ;
- une date de départ à partir d'un lieu géolocalisé ;
- une date de livraison à partir d'un lie géolocalisé.

Le serveur héberge également une deuxième base de données 302 concernant les individus « voyageurs » de la communauté et leurs unités informatiques portables, parmi lesquelles (outre l'identité des individus) :
- une date de départ de l'individu ;
- un lieu de départ de l'individu ;
- une date d'arrivée de l'individu ;
- un lieu d'arrivée de l'individu.

On note que chaque dispositif embarqué est identifiable par un code numérique d'identification, le serveur 30 hébergeant une base de données de codes numériques 301 d'identification des dispositifs embarqués.

On note en outre que la plateforme comprend des moyens de connexion et de communication avec les interfaces utilisateurs paramétrées pour transmettre à la plateforme des requêtes d'acheminement d'objets.

En pratique, ces interfaces sont constituées par des ordiphones sur lesquels a été chargée une application informatique dédiée. Le service peut être également disponible à partir d'un ordinateur.

Le serveur héberge également une troisième base de données 304 concernant les individus « dépositaires » de la communauté et leurs unités informatiques portables et/ou leur ordinateur, parmi lesquelles (outre leur identité) :
- leur position géographique ;
- le nombre d'emballage(s) (avec dispositif embarqué) disponible(s) dont ils disposent.

Les bases de données 302, 303 et 304 peuvent être dissociées ou être regroupées au sein d'une base de données globale. Chacune d'elles est susceptible de recevoir des données en liaison avec les applications informatiques dédiées au profil utilisateur, en l'occurrence respectivement à l'application informatique « voyageur » 305, à l'application informatique « clients » 306 et l'application informatique « dépositaires » 307.

Le processus d'acheminement des objets et d'interaction entre les individus dans un système d'acheminement selon l'invention va être maintenant décrit.

Selon un premier exemple d'acheminement, un objet est acheminé d'un lieu dépositaire à un autre lieu dépositaire, l'utilisateur du service émetteur de l'objet devant alors se rendre au premier lieu dépositaire pour déposer l'objet à acheminer et l'individu destinataire devra se rendre au deuxième lieu dépositaire pour prélever l'objet acheminé.

Selon ce processus, l'utilisateur ayant un objet à acheminer se connecte à la plateforme du système pour accéder à l'interface utilisateur lui permettant de saisir :
- une date de départ, à partir d'un lieu géolocalisé (dans la mesure où l'utilisateur connait le lieu dépositaire le plus proche, faute de quoi la plateforme peut définir ce lieu dépositaire en fonction de la géolocalisation de l'utilisateur, par exemple en fonction de son lieu de travail ou de son domicile) ;
- une date de livraison et un lieu géolocalisé (pouvant prendre la forme d'une adresse de destination) ;
- le poids et/ou les dimensions de l'objet ;
- éventuellement, un moyen de paiement.

En fonction des moyens de géolocalisation de départ saisis, la plateforme réserve un paquet d'expédition pourvu d'un dispositif embarqué tel que décrit précédemment, et signaler cette réservation au lieu dépositaire. Si aucun paquet d'expédition n'est disponible sur le lieu dépositaire défini, la plateforme assure un service d'envoi d'un paquet d'expédition au lieu dépositaire défini.

L'utilisateur se rend sur le premier lieu dépositaire avec son objet à acheminer. A l'aide d'une application informatique dédiée chargée sur l'ordiphone de l'utilisateur, celui-ci transmet au dépositaire, qui dispose de la même application informatique sur son ordiphone (ou sur un ordinateur), des données relatives à l'objet et à son acheminement. A l'aide de ces données d'identification, le dépositaire identifie le paquet d'expédition affecté à l'objet à acheminer (la plateforme du service ayant choisi un code numérique d'identification spécifique du dispositif embarqué intégré au paquet d'expédition).

Le dépositaire dispose l'objet à acheminer dans le paquet d'expédition identifié. L'utilisateur valide, par l'intermédiaire de son application dédiée, la remise au dépositaire, ce dernier acceptant numériquement cette remise, le rendant alors responsable de l'objet et du paquet d'expédition.

On note à ce stade que le dispositif embarqué du paquet d'expédition commence à communiquer, par les moyens de communication de proximité sans fil, avec l'ordiphone du dépositaire pour accéder aux ressources de géolocalisation de cet ordiphone.

En parallèle, une communauté d'individus se déclare à la plateforme de gestion du système, et qui saisissent notamment :
- une date de départ ;
- un lieu de départ ;
- une date d'arrivée ;
- un lieu d'arrivée.

Avec les données utilisateurs, et les données sur les individus de la communauté et sur leur déplacement, le serveur de la plateforme constitue deux bases de données, à savoir une base de données concernant les objets à acheminer et une base de données concernant les unités portables détenues par les individus, avec les données relatives au déplacement des individus.

Le système de gestion compare en temps réel les données relatives au paquet d'expédition présent dans les lieux dépositaires et prêt à être expédié, avec la base de données relative aux individus de la communauté et à leur déplacement. Cette comparaison conduit la plateforme à choisir un individu pour sa présence à proximité du lieu dépositaire de départ et pour sa destination à proximité du lieu dépositaire d'arrivée. Une alerte est envoyée par exemple par SMS sur l'ordiphone de l'individu voyageur lui indiquant le moment et le lieu où il doit se rendre pour prélever le paquet d'expédition incluant l'objet à acheminer.

Sur le lieu dépositaire de départ, le voyageur s'identifie auprès du dépositaire à l'aide de l'application informatique chargée sur son ordiphone, et transmet au dépositaire l'identification du paquet d'expédition qu'il vient de prélever.

Par le système informatique, le dépositaire valide la remise du paquet d'expédition à un individu voyageur, ce qui conduit à :
- déconnecter l'ordiphone du dépositaire du dispositif embarqué dans le paquet ;
- connecter le dispositif embarqué dans le paquet d'expédition à l'ordiphone de l'individu voyageur.

L'individu voyageur se rend au deuxième lieu dépositaire, à savoir sur le lieu dépositaire d'arrivée. Pendant le voyage, le dispositif embarqué dans le paquet d'expédition est en permanence connecté avec l'ordiphone de l'individu voyageur, assurant un suivi et une géolocalisation de l'objet acheminé, ces données pouvant être transmises périodiquement à la plateforme de façon à être accessibles pour l'utilisateur et l'expéditeur.

Sur le lieu dépositaire d'arrivée, l'individu voyageur remet le paquet d'expédition au dépositaire, ceci en indiquant par informatique l'identification du paquet et d'expédition au dépositaire, ce dernier validant en informatique la prise en charge du paquet d'expédition, ce qui conduit à :
- déconnecter le dispositif embarqué du paquet d'expédition de l'ordiphone de l'individu voyageur ;
- connecter le dispositif embarqué du paquet d'expédition à l'ordiphone du dépositaire.

L'acceptation de la prise en charge du paquet d'expédition par le dépositaire d'arrivée est signalée en informatique à la plateforme de gestion du système, qui envoie un signal d'alerte par SMS à l'utilisateur destinataire, en lui transmettant les données de géolocalisation du lieu dépositaire d'arrivée.

L'individu destinataire se rend sur le lieu dépositaire d'arrivée et s'identifie auprès du dépositaire par l'intermédiaire de l'application informatique chargée au préalable sur son ordiphone.

Le dépositaire vérifie en informatique l'identité de l'individu destinataire et valide la remise à cet individu du paquet d'expédition, ce qui le conduit à :
- déconnecter le dispositif embarqué du paquet de l'ordiphone du dépositaire ;
- connecter le dispositif embarqué du paquet d'expédition à l'ordiphone de l'individu destinataire.

L'utilisateur destinataire valide en informatique la réception du paquet d'expédition, cette validation étant transmise à la plateforme de gestion du système qui informe par SMS l'utilisateur expéditeur.

Bien entendu, le système d'acheminement de dépositaire et dépositaire qui vient d'être décrit peut être enrichi en amont et en aval, par l'intermédiaire de l'intervention d'un individu voyageur assurant l'acheminement du paquet d'expédition entre l'individu expéditeur et le lieu dépositaire de départ, et par l'intervention d'un individu voyageur pouvant, à l'autre extrémité de l'acheminement, assurer le déplacement du paquet d'expédition du lieu dépositaire d'arrivée à l'individu destinataire.

Il est à noter que le système d'acheminement selon l'invention peut être implémenté d'un système de transfert de responsabilité, visant à assurer une traçabilité des prises en charges successives du ou des emballages équipés des dispositifs embarqués décrits précédemment.

Selon un mode de réalisation particulier, ce système de transfert de responsabilité prévoit que le serveur de la plateforme du système comprend une base de données incluant des données d'identification et de suivi de chaque dispositif embarqué. Plus précisément, les données d'identification peuvent comprendre, d'une part, le numéro Bluetooth du module informatique et, d'autre part, un numéro de voyage, défini par le serveur de la plateforme et affecté au dispositif embarqué en couplant le numéro Bluetooth et le numéro de voyage. Cette affectation est réalisé en pratique au moment où l'objet est inséré dans l'emballage, la personne réalisant cette opération se connectant au serveur et reliant le dossier numérique du cheminement à réaliser (demandé et enregistré par l'émetteur de l'objet) à un code visuel (numéro ou QR code, ou autre) porté par l'emballage (tous les emballages, et donc tous les numéros Bluetooth, avec les codes visuels correspondants étant connus du serveur).

Un champ « personne en charge » est également associé aux données d'identification et de suivi du dispositif embarqué.

Ainsi, le système de système de transfert de responsabilité est programmé pour exécuter les étapes suivantes (par le serveur de la plateforme du système) :
- association, dans le champ « personne en charge », de l'identité de la personne prenant en charge l'emballage (et l'objet qu'il contient) à la liste des données d'identification et de suivi du dispositif embarqué dans l'emballage, avec horodatage de cette association ;
- envoi, à une nouvelle personne sur le point de prendre en charge l'emballage, d'une requête d'acceptation émise par la personne sur le point de transmettre l'emballage, par l'intermédiaire de la plateforme du système ;
- réception de l'acceptation émise par la personne prenant en charge l'emballage ;
- modification, dans le champ « personne en charge », de l'identité de la personne prenant en charge l'emballage (et l'objet qu'il contient), avec horodatage de cette modification.

On note que les étapes qui viennent d'être décrites supposent que les deux personnes, celle qui cède la prise en charge et celle qui la prend, aient une connexion au serveur de la plateforme.

Il est toutefois envisageable, dans le cas où l'une des personnes, voire les deux personnes, ne disposent pas de connexion au serveur, de modifier et de stocker provisoirement le changement d'information relative à la personne en charge de l'emballage, l'information étant transmise au serveur par l'ordiphone correspondant (ou l'ordinateur correspondant) dès que la connexion est retrouvée (voire par l'ordiphone d'une tierce personne).

## Revendications

1. Système d'acheminement d'objets par des individus d'une communauté, mettant en oeuvre un système de traçabilité spatio-temporelle comprenant une plate-forme informatique incluant au moins une application informatique destinée à être chargée par des unités informatiques portables détenues par les individus de la communauté et comprenant des premiers moyens de communication de proximité sans fil et des moyens de géolocalisation, le système d'acheminement d'objets comprenant des dispositifs embarqués dans des emballages destinés à contenir les objets, les dispositifs embarqués comprenant chacun des deuxièmes moyens de communication de proximité sans fil, aptes à communiquer avec les premiers moyens de communication de proximité sans fil, et au moins un module informatique de traitement apte à coopérer avec les deuxièmes moyens de communication de proximité sans fil pour récupérer et traiter des données fournies par lesdits deuxièmes moyens de communication de proximité sans fil, le au moins un module informatique de traitement comprenant ladite application informatique en vue d'autoriser l'échange de données entre le module informatique et les unités informatiques portables, ladite application informatique étant paramétrée pour ouvrir un canal de communication destiné à permettre aux dispositifs embarqués d'accéder et d'utiliser les moyens de géolocalisation des unités informatiques portables.

2. Système selon la revendication 1, **caractérisé en ce que** les unités informatiques portables sont constitués par des ordiphones.

3. Système selon la revendication 1, **caractérisé en ce que** les dispositifs embarqués comprennent des moyens d'alimentation électrique sous forme de batterie non rechargeable.

4. Système selon la revendication 1, **caractérisé en ce que** la plate-forme inclut des premiers moyens de communication longue distance, les unités informatiques comprenant des deuxième moyens de communication longue distance aptes à communiquer avec les premiers moyens de communication longue distance.

5. Système selon la revendication 4, **caractérisé en ce que** la plate-forme comprend un serveur accessible à distance, et paramétré pour recevoir des données d'acheminement d'un objet d'un point de départ à un point d'arrivée.

6. Système selon la revendication 5, **caractérisé en ce que** le serveur comprend des moyens de stockage de données de géolocalisation transmises à la plate-forme par les unités portables.

7. Système selon la revendication 5, **caractérisé en ce que** le serveur héberge une base de données concernant des objets à acheminer parmi lesquelles :
- des informations caractérisant en poids et/ou en dimensions un objet à acheminer ;
- une date de départ à partir d'un lieu géolocalisé ;
- une date de livraison en un lieu géolocalisé.

8. Système selon la revendication 5, **caractérisé en ce que** le serveur héberge une base de données concernant les unités informatiques portables détenues par les individus de la communauté parmi lesquelles ;
- une date de départ de l'individu ;
- un lieu de départ de l'individu ;
- une date d'arrivée de l'individu ;
- un lieu d'arrivée de l'individu.

9. Système selon la revendication 5, **caractérisé en ce que** chaque dispositif embarqué est identifiable par un code numérique d'identification et **en ce que** le serveur héberge une base de données de données de codes numériques d'identification des dispositifs embarqués.

10. Système selon la revendication 9, **caractérisé en ce que** la plate-forme comprend des moyens de connexion et de communication avec des interfaces utilisateurs paramétrées pour transmettre à la plate-forme des requêtes d'acheminement d'objets.

11. Procédé de traçabilité d'un objet acheminé à l'aide d'un système selon l'une quelconque des revendications 1 à 10, **caractérisé en ce qu'**il comprend les étapes de :
- activation de l'application informatique autorisant l'échange de données entre une unité informatique portable et un dispositif embarqué ;
- géolocalisation du dispositif embarqué par l'utilisation des moyens de géolocalisation de l'unité informatique portable.

12. Programme d'ordinateur comprenant des instructions adaptées pour l'exécution des étapes du procédé selon la revendication 11 lorsque ledit programme d'ordinateur est exécuté par au moins un processeur.

13. Support d'enregistrement lisible par un ordinateur sur lequel est enregistré un programme d'ordinateur comprenant des instructions pour l'exécution des étapes du procédé selon la revendication 11.

## Patentansprüche

1. System zum Befördern von Gegenständen durch Einzelpersonen einer Gemeinschaft, das ein System zur zeitlich-räumlichen Rückverfolgung einsetzt und eine Informatikplattform mit zumindest einer Computeranwendung umfasst, die in tragbare Rechnereinheiten geladen werden soll, die sich im Besitz von Einzelpersonen der Gemeinschaft befinden und erste drahtlose Kommunikationsmittel im Nahbereich und Geolokalisierungsmittel umfassen, wobei das System zum Befördern von Gegenständen Vorrichtungen umfasst, die in Verpackungen integriert sind, die die Gegenstände enthalten sollen, wobei die integrierten Vorrichtungen jeweils zweite drahtlose Kommunikationsmittel im Nahbereich umfassen, die mit den ersten drahtlosen Kommunikationsmitteln im Nahbereich kommunizieren können, und zumindest ein EDV-Verarbeitungsmodul, das geeignet ist, mit den zweiten drahtlosen Kommunikationsmitteln im Nahbereich zusammen zu wirken, um Daten zu sammeln und zu verarbeiten, die von den zweiten drahtlosen Kommunikationsmitteln im Nahbereich bereitgestellt werden, wobei das zumindest eine EDV-Verarbeitungsmodul die Computeranwendung umfasst, um den Datenaustausch zwischen dem EDV-Modul und den tragbaren Rechnereinheiten zu genehmigen, wobei die Computeranwendung so eingerichtet ist, dass sie einen Kommunikationskanal öffnet, der den integrierten Vorrichtungen den Zugriff und die Verwendung der Geolokalisierungsmittel der tragbaren Rechnereinheiten ermöglicht.

2. System nach Anspruch 1, **dadurch gekennzeichnet, dass** die tragbaren Rechnereinheiten aus Smartphones bestehen.

3. System nach Anspruch 1, **dadurch gekennzeichnet, dass** die integrierten Vorrichtungen Stromversorgungsmittel in Form einer nicht wiederaufladbaren Batterie umfassen.

4. System nach Anspruch 1, **dadurch gekennzeichnet, dass** die Plattform erste Fernkommunikationsmittel umfasst, wobei die Rechnereinheiten zweite Fernkommunikationsmittel umfassen, die geeignet sind, mit den ersten Fernkommunikationsmitteln zu kommunizieren.

5. System nach Anspruch 4, **dadurch gekennzeichnet, dass** die Plattform einen fernzugänglichen Server umfasst, der so eingerichtet ist, dass er Beförderungsdaten eines Gegenstands von einem Start- zu einem Ankunftspunkt empfängt.

6. System nach Anspruch 5, **dadurch gekennzeichnet, dass** der Server Mittel zum Speichern von Geolokalisierungsdaten umfasst, die von den tragbaren Einheiten an die Plattform übermittelt werden.

7. System nach Anspruch 5, **dadurch gekennzeichnet, dass** der Server eine Datenbank bezüglich der zu befördernden Gegenstände hostet, darunter:
- Informationen, die das Gewicht und/oder die Abmessungen eines zu befördernden Gegenstands kennzeichnen;
- ein Abfahrtsdatum ab einem geolokalisierten Ort;
- ein Lieferdatum an einem geolokalisierten Ort.

8. System nach Anspruch 5, **dadurch gekennzeichnet, dass** der Server eine Datenbank bezüglich der tragbaren Rechnereinheiten hostet, die sich im Besitz von Einzelpersonen der Gemeinschaft befinden und darunter:
- ein Abfahrtsdatum der Einzelperson;
- einen Abfahrtsort der Einzelperson;
- ein Ankunftsdatum der Einzelperson;
- einen Ankunftsort der Einzelperson.

9. System nach Anspruch 5, **dadurch gekennzeichnet, dass** jede integrierte Vorrichtung durch einen digitalen Identifikationscode identifizierbar ist, und dass der Server eine Datenbank mit digitalen Identifikationscodes der integriert en Vorrichtungen hostet.

10. System nach Anspruch 9, **dadurch gekennzeichnet, dass** die Plattform Anschluss- und Kommunikationsmittel mit Benutzerschnittstellen umfasst, die so eingerichtet sind, dass sie Anforderungen der Beförderung von Gegenständen an die Plattform übermitteln.

11. Verfahren zur Rückverfolgung eines mittels eines Systems nach einem beliebigen der vorstehenden Ansprüche 1 bis 10 beförderten Gegenstands, **dadurch gekennzeichnet, dass** es die folgenden Schritte umfasst:
- Aktivierung der Computeranwendung, die den Datenaustausch zwischen einer tragbaren Rechnereinheit und einer integrierten Vorrichtung ermöglicht;
- Geolokalisierung der integrierten Vorrichtung durch Benutzung der Geolokalisierungsmittel der tragbaren Rechnereinheit.

12. Rechnerprogramm umfassend geeignete Anweisungen zur Durchführung der Schritte des Verfahrens nach Anspruch 11, wenn das Rechnerprogramm von zumindest einem Prozessor ausgeführt wird.

13. Rechnerlesbares Aufzeichnungsmedium, auf dem ein Rechnerprogramm aufgezeichnet ist, das Anweisungen zur Durchführung der Schritte des Verfahrens nach Anspruch 11 enthält.

## Claims

1. System for delivering objects by individuals of a community using a space-time traceability system comprising a computerized platform including at least one computer application intended to be loaded into portable computing units held by individuals of the community and comprising first local wireless communication means and geolocating means, the object delivery system comprising devices embedded in packaging intended to contain the objects, the embedded devices each comprising second local wireless communication means able to communicate with the first local wireless communication means and at least one computer processing module able to cooperate with the second local wireless communication means to collect and process data provided by said second local wireless communication means, the at least one computer processing module comprising said computer application to authorize exchange of data between the computer module and the portable computing units, said computer application being parameterized to open a communication channel intended to enable the embedded devices to access and use the geolocating means of the portable computing units.

2. The system according to claim 1, **characterized in that** the portable computing units are composed of smartphones.

3. The system according to claim 1, **characterized in that** the embedded devices comprise electrical powering means in the form of a primary battery.

4. The system according to claim 1, **characterized in that** the platform includes first long-distance communication means, the computing units comprising second long-distance communication means able to communicate with the first long-distance communication means.

5. The system according to claim 4, **characterized in that** the platform comprises a remotely accessible server and parameterized to receive delivery data concerning an object from a departure point to a destination point.

6. The system according to claim 5, **characterized in that** the server comprises means to store geolocation data transmitted to the platform by the portable units.

7. The system according to claim 5, **characterized in that** the server hosts a database on objects to be delivered, among which:
- data characterizing the weight and/or dimensions of an object to be delivered;
- a departure date from a geolocated location;
- a delivery date at a geolocated location.

8. The system according to claim 5, **characterized in that** the server hosts a database on the portable computing units held by the individuals of the community, among which:
- a departure date of the individual;
- a place of departure of the individual;
- an arrival date of the individual;
- a place of arrival of the individual.

9. The system according to claim 5, **characterized in that** each embedded device can be identified by a numerical identification code and **in that** the server hosts a database of numerical identification codes data of the embedded devices.

10. The system according to claim 9, **characterized in that** the platform comprises connection and communication means with user interfaces parameterized to transmit object delivery requests to the platform.

11. Method for tracing an object delivered by means of a system according to any of claims 1 to 10, **characterized in that** it comprises the steps of:
- activating the computer application authorizing exchange of data between a portable computing unit and an embedded device;
- geolocating the embedded device using the geolocating means of the portable computing unit.

12. Computer programme comprising instructions adapted to implement the steps of the method according to claim 11 when said computer programme is executed by at least one processor.

13. Computer-readable recording medium on which a computer programme is recorded comprising instructions to implement the steps of the method according to claim 11.
